# EUROPEAN PATENT SPECIFICATION

(11) **EP 0 422 042 B1**
(45) Date of publication and mention of the grant of the patent: **18.01.1995**
(21) Application number: 89906779.7
(22) Date of filing: 02.06.1989
(51) Int. Cl.: B29C 47/52

(54) **EXTRUSION METHOD, APPARATUS AND PRODUCT**
EXTRUSIONSVERFAHREN, VORRICHTUNG UND ERZEUGNIS
PROCEDE ET APPAREIL D'EXTRUSION, PRODUIT EXTRUDE

(30) Priority: 06.06.1988 FI 882653
(43) Date of publication of application: 17.04.1991
(73) Proprietor: KIRJAVAINEN, Kari, SF-02320 Espoo (FI)
(72) Inventor: KIRJAVAINEN, Kari, SF-02320 Espoo (FI)
(74) Representative: Kummelsten, Per-Arne
(86) International application number: FI8900099
(87) International publication number: WO8911961

(56) References cited:
- EP-A- 0 099 222
- EP-A- 0 196 492
- DE-A- 2 659 182

## Description

The present invention relates in general to extrusion technics and particularly to a method for processing extrudable material for the manufacture of an extrusion product, advantageously a multi layer extrusion product, by an extrusion device, wherein the extrudable material is brought in solid form, preferably as powder or in granular form, and which comprises a central extrusion channel as well as a stator means and a rotor means defining said channel; and also to an extrusion device for processing the extrudable material to produce an extrusion product, advantageously a multilayer extrusion product, into which extrusion device the extrudable material is brought in solid form, preferably as powder or in granular form, said extrusion device comprising a central extrusion channel as well as a stator means and a rotor means defining said channel. The invention relates also to an extrusion product.

Traditional extrusion methods can principally be divided into extrusion carried out by so-called axial extruders and the one carried out by so-called radial extruders.

As drawbacks concerning the axial extruders, the benefit of which is a good resistance against pressure load, can be mentioned, that especially for the production of rotation symmetrical and/or multilayer products many axial extruders must be connected to the extrusion head, whereby dispension of the extrudable mass evenly and homogenously at the extrusion head creates a problem, this being hardly possible or even totally impossible, especially when even minor variations or regulations of the extrudable mass flow amounts occur in the processing, and as a result almost without exception an eccentric and unhomogenous extrusion product is obtained.

A drawback in radial extruders, the benefit of which is a rather good adaptability tor production of rotational symmetrical and multilayer products, is a poor resistance against pressure load, so that the device can only be used for low yields. For higher yields the sizes and dimensions substantially increase, whereby the investment costs of a radial extruder become significantly high compared with the advantages gained.

EP-A-99222 discloses an extruded internally cross-ribbed plastics material structure having inner and outer layers connected together by a bi-planar mesh formed of helical ribs bonded at their cross-over paints.

The main object of the present invention is to provide a new method and extrusion device for processing extrudable material and at the same time to combine the benefits of traditional extrusion technics and to eliminate the drawbacks relating thereto. The goal and the purpose of the present invention is particularly to enable by the improved method and the new device both the manufacture of multilayer products and the increase of yield as well as variation possibilities of the number of layers in the product.

These goals have been attained by the method mentioned in the introduction so that an optional number of alternately packlike one within the other arranged stator and rotor means is used in the extrusion device, and that the material to be extruded along with the feeding will first be melted in an advantageously conical or double-conical annular feed defile at least partially continuously decreasing in diameter between the stator means and the rotor means, after the infeed at the beginning of the feed defile and before the central extrusion channel, and then compressed to the final extrusion pressure; and by the device mentioned in the introduction so that an optional number of stator and rotor means has been arranged alternately packlike one within the other, and that each feed defile between the stator means and the rotor means has been formed as annular feed defile at least partially continuously decreasing in diameter and advantageously corresponding a conical or double-conical form, comprising in the flow direction of the extrudable material first an input zone, then a melting zone and finally a compression zone ending to the central extrusion channel.

Characteristic to the extrusion product according to the invention is that said product is a multilayer product, and that at least one layer of the product includes an interlacing orientation field, wherein plastic is helically oriented or directed forming a reinforcing netlike structure into the product.

In a preferable embodiment of the method according to the invention the pressure of the extrudable material is continuously increased as it flows in the feed defile, and the extrudable material is inductively melted by an induction conduct or coil in each stator means by heating the stator means defining the feed defile with eddy current principle.

As the most significant advantages of the invention it can be mentioned, that the mechanical strength and resistance against pressure load of the improved extrusion device according to the invention can be compared with the corresponding qualities of an axial extruder, and a remarkable benefit is also, that the final extrusion pressure is not created until at the end of the extrusion device immediately before the central channel before the nozzle. The yield and/or the number of material layers to be formed can almost endlessly be increased just by increasing the number of the stator-rotor-modules to be arranged packlike one within and after the other. Moreover it is possible in the extrusion device according to the invention to realize absolutely evenly distributed central mass distribution, by which an absolutely homogenous and central extrusion product will be obtained as the result.

The invention will be described in the following by some of its advantageous embodiments with reference to accompanying drawings, wherein
- figure 1 shows in general an extrusion apparatus according to the invention as seen from above,
- figure 2 shows a partial cross-section of the first advantageous embodiment of the invention,
- figure 3 illustrates one advantageous solution of the arrangement to be used in the extrusion device according to the invention to melt the extrudable material, and
- figure 4 shows a partial cross-section of the second advantageous embodiment of the invention.

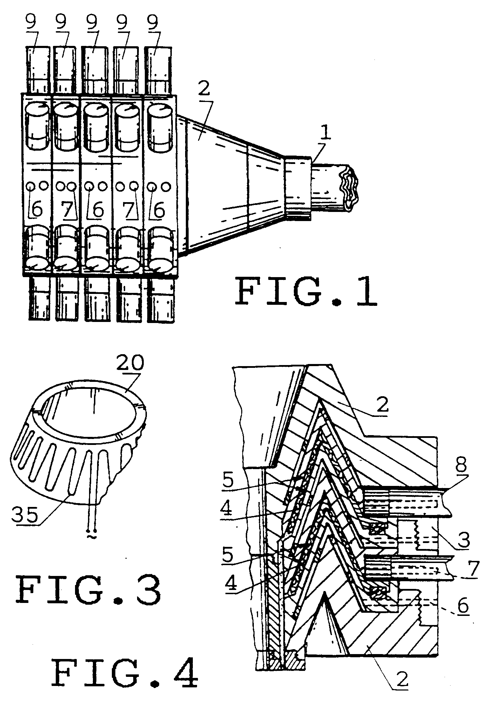

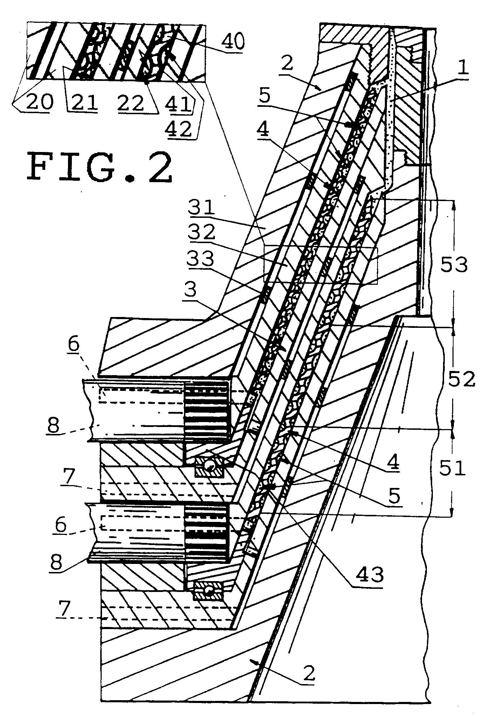

The extrusion device shown in figure 1 comprises a central extrusion channel, which is peripherically defined from the outside alternately one within and after the other into a packlike form assembled stator and rotor means 2, 3 and 4. Compactness of the stator-rotor pack has been secured by a bolt-nut joint extending axially through the pack. The material to be extruded into the extrusion device, which will in the following be referred as plastic, is pneumatically fed by a carrier medium, which will in the following be referred as air. The mixture of plastic and air under pressure is conveyed through the infeed opening 6 first to one side of the rotor means 4, from which begins one feed defile 5 for plastic supply defined between the stator and rotor means. After the plastic is fed to the beginning of the feed defile, the air flows through a second discharge opening 7 in the stator means 2, 3 out of the extrusion device.

The manner for realization of the rotational drive of each rotor means 4 is not most essential to the operation of the invention. In tests an electric motor drive 9 and an hydraulic motor has been used, whereby at least one, advantageously however several mutually symmetrically arranged, at the end toothed power transmission shafts, i.e. drive shafts 8, are connected, as shown in figure 2 or 4, with a correspondingly toothed radially extending flangelike extension 43 in the rotor means 4 to rotate the rotor means 4.

As electric motors 9 to drive the rotor means 4 can advantageously be used either parallel connected AC-motors or in series or parallel connected DC-motors, whereby said motors can be controlled by one regulator, advantageously by an inverter regulator, for each extrudable plastic layer. Further it is advisable to provide electric motors 9 with a gear arrangement to generate a suitable rotational speed for the plastic supply. To achieve a compact structure this gear arrangement can be integrated to the frame of the extrusion device or to stationary stator means 2, 3.

As hydraulic motors driving the rotor means 4 of the extrusion device it is advisable to use hydraulic motors with slow rotational motion, whereby there is no need for gears and the transmission shaft of the hydraulic motor operates directly as a driving shaft 8 to rotate the rotor means 4.

To generate an extrudable plastic flow in the annular feed defile 5 defined between the stator means and the rotor means the extrusion device according to the invention is provided with flow generating means, which can be placed:
A)
   1) to the side surface 21, 22 of the stator means, or
   2) to the side surface 41, 42 of the rotor means, defining the feed defile 5;
B) to the side surface 21, 22 of the stator means and
   to the side surface 41, 42 of the rotor means,
   defining the feed defile 5.

According to advantageous embodiments of the invention the flow generating means comprise helical worms, grooves or recesses, which extend as continuous or interrupted formations over the feed defile 5 and form a many-headed and -pitched, e.g. 8-headed and -pitched, formation of helical worms, spiral grooves or spiral recess lines at least at one boundary surface of the feed defile 5.

In the extrusion device according to the first embodiment of the invention shown in figure 2 all inner surfaces 21 and outer surfaces 22 of the stator means 2 defining the feed defiles 5 are smooth, while all inner surfaces 41 and outer surfaces 42 of the rotor means 4 defining the feed defiles 5 are provided with flow generating means composed of formations of many-headed helical worms.

To achieve during the plastic flow caused by the flow generating means in each feed defile 5 an advantageously continuously increasing pressure to the plastic, the feed defile 5 has been formed as a ring channel with a continuously decreasing diameter, advantageously in conical or double-conical shape, in which channel plastic during its flow according to the invention is first melted after the infeed and before the central extrusion channel 1, and then preferably just before the central extrusion channel 1 is compressed to the final extrusion pressure. During its flow in the feed defile 5 the pressure of the plastic changes advantageously as follows:
- in the feed zone 51 following the infeed the pressure is raised to 3...7 MPa, advantageously to about 5 MPa,
- in the melting zone 52 following the feed zone 51 the pressure is raised to 6...14 MPa, advantageously to about 10 MPa, and
- in the compression zone 53 following the melting zone 52 before the extrusion channel 1 the pressure is raised to 10...60 MPa, advantageously between 15...40 MPa.

To form the continuously decreasing annular feed defile and thus to increase the pressure inside the feed defiles, the diameters of which are continuously decreasing, defined between alternately and one after the other arranged stator and rotor means 2, 3, 4, each stator means 2, 3 has a conically tapering sleeve part 20 and each rotor means 4 has also a conically tapering sleeve part 40. Said conically tapering parts 20 and 40 have been shaped to correspond each other, so that they fit packlike within each other. Moreover, as can be seen in figures 2 and 4, a radially extending flangelike extension 43 is jointed to the larger end of the conically tapering sleeve part 20 of the stator means 2, 3 and respectively of the rotor means 4. Between said extensions has been mounted a thrust bearing enabling the rotational movement of the rotor means 4, whereby the extension 43 of the rotor means is toothed to fit with at least one toothed drive shaft 8 rotating the rotor means 4.

In order to guarantee the mechanical strength of the compact extrusion device according to the invention and at the same time to enable mounting of the means 35 for melting the plastic and also to prevent deformations in the walls defining the feed defile 5 when pressure increases, each stator means 2, 3 includes a first conical element 31 and a second conical element 32 supported with a distance from each other by distance pieces 33, whereby into the intermediate space 34 between the conical elements 31 and 32 have been mounted said means 35 for melting the extrudable material.

In the preferable embodiment of the invention shown in figure 3 the means 35 for melting the extrudable material comprise an induction conduct or coil 35 mounted in a wave-like manner into the intermediate space 34 between the conical elements 31 and 32, by which conductor or coil the walls of the stator means 2 and 3 defining the feed defile are heated by the eddy current principle.

The extrusion device according to the second advantageous embodiment of the invention corresponds in its operation with the extrusion device of the first embodiment of the invention and differs only structurally from the first embodiment in the sense that each feed defile 5 for the extrudable material between the stator means 2, 3 and the rotor means 4 forms an angle, whereby each stator means 2, 3 and rotor means 4 are formed by sleeve parts advantageously double-conical in shape and adapted one after and within the other. In this second embodiment the axial component of the extrudable plastic flow at the beginning of the feed defile 5 is opposite compared with the axial component of the extrudable plastic flow at the end of the feed defile 5, whereby the loads directed to the structural parts of the extrusion device by the plastic under pressure partly compensate each other and smaller thrust bearings can be used between the stator means 2, 3 and the rotor means 4.

Especially to even out the plastic supply it is advantageous that the plastic is supplied into the feed defile 5 from several points on the periphery of the rotor means 4, preferably by equal distances from each other, whereby it is possible to eliminate the problems caused by unsymmetrical supply, particularly to avoid the possibility, that the final product would be unsymmetrical and/or unhomogenous.

The invention has been described above only by some of its advantageous embodiments. This is not, of course, meant to limit the invention and as is evident for persons skilled in the art, several modifications, variations and alternatives are possible within the scope of the accompanying claims concerning the construction as well as the infeed, melting and pressurizing of the extrudable material. Especially there is a reason to emphasize, that it is not necessary to form the opposite nested surfaces of rotor and stator means as continuously tapering conical forms, but that said surfaces can have bends, ball surfaces, parabolic surfaces and corresponding shapes, however so, that mounting of the parts in a packlike manner and forming of feed defiles therebetween is realized. It is also possible to supply into feed defiles separated by rotor means, i.e. on both sides of the rotor, different extrudable materials - hence by means of one single rotor between the stator means it will be possible to produce a 2-layer product, and if several modules are mounted one after the other, it is possible to produce extrusion products with high number of layers. In this case the extrusion device must include at least one supply opening for each layer to be extruded and one discharge opening for the carrier material. Further there is a reason to emphasize, that especially to guarantee the homogeneity of the yield and the equal thickness of the layers, it is advantageous that the rotors are rotated in opposite directions, whereby the rotors are rotated in opposite directions in respect to each other in any optional pair of pair of two successive rotors.

## Claims

1. A method for processing extrudable material in an extrusion device, wherein the extrudable material is brought in solid form, advantageously as powder or in granular form, and which includes, defined by the stator means (2, 3) and the rotor means (4):
- an annular, advantageously conical or double-conical feed defile (5), at least partially continuously reducing in diameter, for the extrudable material, and
- a central extrusion channel (1) for the extrudable material, **characterized** in that for producing especially a multi layer extrusion product an optional number, at least three, of stator means (2, 3) and an optional number, at least two, of rotor means (4), arranged in a packlike manner alternately one within the-other, is used, and that the extrudable material is first melted in each feed defile (5) for the extrudable material between the stator means (2, 3) and the rotor means (4) after the infeed before the central extrusion channel and thereafter compressed to the final extrusion pressure.

2. A method according to the claim 1, **characterized** in that the pressure of the extrudable material is continuously raised and that the extrudable material is inductively melted by an induction conduct or coil (35) in each stator means (2, 3) by heating the stator means (2, 3) defining the feed defile (5) by the eddy current principle.

3. A method according to the claim 1 or 2, **characterized** in that the extrudable material is supplied into the feed defile (5) from several points at the periphery of the rotor means (4), preferably with equal distances between each other.

4. A method according to any of the preceding claims 1...4**, characterized** in that into the feed defiles (5) separated by the rotor means (4) from each other, i.e. onto different sides of the rotor means (4), are supplied different extrudable materials.

5. A method according to any of the preceding claims 1...4, **characterized** in that in order to guarantee the homogeneity of the extrusion product and/or equal thickness of the material layer the rotor means (4) are rotated alternately in opposite directions.

6. A method according to the claim 5, **characterized** in that for producing interlacing orientation fields into the product, whereby the plastic is helically oriented or directed in the product forming at least one reinforcing netlike structure, plastics mixed with fibres and/or polymers forming fibres in the extrusion, like fluid crystal polymers, are used as the extrudable material.

7. An extrusion device for processing extrudable material, into which extrusion device the extrudable material is brought in a solid form, advantageously as powder or in granular form, said extrusion device including, defined by the stator means (2, 3) and the rotor means (4):
- an annular, advantageously conical or double-conical feed defile (5) for extrudable material, at least partially continuously reducing in diameter, and
- a central extrusion channel (1) for the extrudable material, **characterized** in that especially for producing a multilayer product an optional number, at least three, of stator means (2, 3) and an optional number, at least two, of rotor means (4) has been arranged alternately packlike one within the other, and that in each feed defile (5) between the stator means (2, 3) and the rotor means (4) there are in the direction of the extrudable material flow first an infeed zone (51), then a melting zone (52) and finally a compression zone (53) ending to the central extrusion channel (1).

8. An extrusion device according to the claim 7, **characterized** in that each stator means (2, 3) includes a conically tapering sleeve part (20), the inner and outer surfaces of which (21, 22) are provided with the means to generate the extrudable material flow, advantageously with helical worms or recesses.

9. An extrusion device according to the claim 7, **characterized** in that each rotor means (4) includes a conically tapering sleeve part (40), the end of which with larger diameter having a flangelike toothed extension (43), which fits with at least one toothed drive shaft (8) driving said rotor means (4), and that the inner and outer surfaces (41, 42) of said sleeve part (40) are provided with means to generate the extrudable material flow, advantageously with helical worms or recesses.

10. An extrusion device according to the claim 7, **characterized** in that each stator means (2, 3) includes a first cone element (31) and a second cone element (32) spaced by distance pieces (33) from each other, whereby means (35) for melting the extrudable material have been placed in the intermediate space (34) between the first and the second cone element (31, 32).

11. An extrusion device according to the claim 10, **characterized** in that the means for melting the extrudable material comprise an induction conduct or coil (35) adapted in said intermediate space (34).

12. An extrusion device according to any of the preceding claims 7...11, **characterized** in that each feed defile (5) for the extrudable material between the stator means (2, 3) and the rotor means (4) forms an angle, whereby each stator means (2, 3) and rotor means (4) are composed of sleeve parts advantageously double-conical in form and arranged one within and after the other, so that at the beginning of the feed defile (5) the axial component of the extrudable material flow is opposite in respect to the axial component of the extrudable material flow at the end of the feed defile.

13. An extrusion device according to any of the preceding claims 6...12, **characterized** in that in order to guarantee the homogeneity of the extrusion product and/or the equal thickness of the material layers the rotor means (4) rotate alternately in opposite directions.

14. An extrusion product,
**characterized** in that the product is a multi-layer product, and that in at least one layer of the product there is an interlacing orientation field, wherein the plastic is helically oriented or directed to form a reinforcing netlike structure into the product.

15. An extrusion product according to the claim 14, **characterized** in that plastic mixed with fibres and/or polymers forming fibres in the extrusion, like fluid crystal polymers, have been used to form each interlacing orientation field, whereby the fibres or the formation of fibres is directed helically in the rotation direction of the rotor means.

## Patentansprüche

1. Verfahren zur Verarbeitung von Extrusionsgut in einer Extrusionsvorrichtung, wo das Extrusionsgut in fester Form, vorteilhafterweise als Pulver oder Granulat eingebracht wird, und die von den Ständerorganen (2, 3) und Läuferorganen (4) begrenzt aufweist;
- einen ringförmigen, vorteilhafterweise konischen oder doppelkonischen, in Durchmesser zumindest teilweise kontinuierlich abnehmenden Einzugskanal (5) für das Extrusionsgut, und
- einen zentralen Extrusionskanal (1) für das Extrusionsgut, **dadurch gekennzeichnet**, daß zur Produzierung eines insbesondere mehrlagigen Extrudats eine optionale Anzahl, zumindest drei Ständerorgane (2, 3) und eine optionale Anzahl, zumindest zwei packungsartig abwechselnd ineinander angeordnete Läuferorgane (4) benutzt werden, und daß das Extrusionsgut zunächst in jedem Einzugskanal (5) für Extrusionsgut zwischen den Ständerorganen (2,3) und den Läuferorganen (4) nach der Eingabe vor dem zentralen Extrusionskanal aufgeschmolzen und anschließend auf den Extrusions-Enddruck verdichtet wird.

2. Verfahren gemäß Anspruch 1, **dadurch gekennzeichnet**, daß der Druck des Extrusionsgutes kontinuierlich erhöht wird und daß das Extrusionsgut durch einen Induktionsleiter oder eine Induktions-spule (35) in jedem Ständerorgan (2, 3) induktiv aufgeschmolzen wird, indem die den Einzugskanal (5) begrenzenden Ständerorgane (2, 3) nach dem Wirbelstromprinzip erhitzt werden.

3. Verfahren gemäß Anspruch 1 oder 2, **dadurch gekennzeichnet**, daß das Extrusionsgut von mehreren, bevorzugt gleichmäßig beabstandeten Stellen am Umfang des Läuferorgans (4) in den Einzugskanal (5) eingegeben wird.

4. Verfahren gemäß einem der vorhergehenden Ansprüche 1 bis 4, **dadurch gekennzeichnet**, daß verschiedene zu extrudierende Stoffe in die durch die Läuferorgane (4) voneinander getrennten Einzugskanäle (5), d.h. auf verschiedene Seiten der Läuferorgane (4) eingeführt werden.

5. Verfahren gemäß einem der vorhergehenden Ansprüche 1 bis 4, **dadurch gekennzeichnet**, daß um Homogenität des Extrudats und/oder gleichmäßige Dicke der Materialschicht sicherzustellen, die Läuferorgane abwechselnd in entgegengesetzten Richtungen rotiert werden.

6. Verfahren gemäß Anspruch 5, **dadurch gekennzeichnet**, daß zur Erzeugung von Feldern mit verflochtener Ausrichtung im Produkt, wobei der Kunststoff im Produkt wendelförmig orientiert oder ausgerichtet ist und zumindest eine verstärkende netzartige Struktur bildet, mit Fasern und/oder bei der Extrusion Fasern bildenden Polymeren, wie etwa Flüssigkristallpolymeren vermischter Kunststoff als Extrusionsgut verwendet wird.

7. Extrusionsvorrichtung zur Verarbeitung von Extrusionsgut, in welcher Extrusionsvorrichtung das zu extrudierende Material in fester Form, vorteilhafterweise als Pulver oder Granulat eingebracht wird, welche Extrusionsvorrichtung von den Ständerorganen (2, 3) und Läuferorganen (4) begrenzt aufweist;
- einen ringförmigen, vorteilhafterweise konischen oder doppelkonischen, in Durchmesser zumindest teilweise kontinuierlich abnehmenden Einzugskanal (5) für Extrusionsgut, und
- einen zentralen Extrusionskanal (1) für das Extrusionsgut, **dadurch gekennzeichnet**, daß insbesondere für die Herstellung eines mehrlagigen Produkts eine optionale Anzahl, zumindest drei Ständerorgane (2, 3) und eine optionale Anzahl, zumindest zwei Läuferorgane (4) abwechselnd packungsartig ineinander angeordnet sind, und daß in jedem Einzugskanal (5) zwischen den Ständerorganen (2, 3) und den Läuferorganen (4) in Fließrichtung des Extrusionsgutes zunächst eine Eingabezone (51), dann eine Schmelzzone (52) und schließlich eine Verdichtungszone (53) vorgesehen sind, die am zentralen Extrusionskanal (1) endet.

8. Extrusionsvorrichtung gemäß Anspruch 7, **dadurch gekennzeichnet**, daß jedes Ständerorgan (2, 3) einen konisch verjüngten Hülsenteil (20) umfaßt, dessen Innen- und Außenfläche (21, 22) mit Mitteln, vorzugsweise mit wendelförmigen Schnecken oder Vertiefungen versehen sind, um die Strömung des Extrusionsgutes zustandezubringen.

9. Extrusionsvorrichtung gemäß Anspruch 7, **dadurch gekennzeichnet**, daß jedes Läuferorgan (4) einen konisch verjüngten Hülsenteil (40) umfaßt, dessen Ende mit dem größeren Durchmesser eine flanschartige verzahnte Ausweitung (43) aufweist, die zumindest mit einer verzahnten besagtes Ständerorgan (4) antreibenden Antriebswelle (8) in Eingriff gebracht werden kann, und daß die Innen- und Außenfläche (41, 42) des Hülsenteils (40) mit Mitteln, vorzugsweise mit wendelförmigen Schnecken oder Vertiefungen versehen sind, um die Strömung des Extrusionsgutes zustandezubringen.

10. Extrusionsvorrichtung gemäß Anspruch 7, **dadurch gekennzeichnet**, daß jedes Ständerorgan (2, 3) ein erstes konisches Element (31) und ein zweites konisches Element umfaßt, die mit Distanzstücken (33) gegenüber einander beabstandet sind, wobei im Zwischenraum (34) zwischen dem ersten und dem zweiten konischen Element (31, 32) Mittel (35) fürs Aufschmelzen des Extrusionsgutes angeordnet sind.

11. Extrusionsvorrichtung gemäß Anspruch 10, **dadurch gekennzeichnet**, daß die Mittel zum Aufschmelzen des Extrusionsgutes einen Induktionsleiter oder eine Induktionsspule (35) umfassen, der/die in besagtem Zwischenraum (34) angeordnet ist.

12. Extrusionsvorrichtung gemäß einem der Ansprüche 7 bis 11, **dadurch gekennzeichnet**, daß jeder Einzugskanal (5) für Extrusionsgut zwischen den Ständerorganen (2, 3) und den Läuferorganen (4) einen Winkel bildet, wobei sich jedes Ständerorgan (2, 3) und Läuferorgan (4) aus in Form vorteilhafterweise doppelkonischen, in- und hintereinander angeordneten Hülsenteilen zusammensetzt, so daß die Axialkomponente des Extrusionsgutflusses am Anfang des Einzugskanals (5) in Hinsicht auf die Axialkomponente des Extrusionsgutflusses am Ende des Einzugskanals entgegengesetzt ist.

13. Extrusionsvorrichtung gemäß einem der vorhergehenden Ansprüche 6 bis 12, **dadurch gekennzeichnet**, daß um Homogenität des Extrudats und/oder gleichmäßige Dicke der Materialschichten sicherzustellen, die Läuferorgane (4) abwechselnd in entgegengesetzten Richtungen umlaufen.

14. Extrudat, **dadurch gekennzeichnet**, daß das Produkt ein mehrlagiges Produkt ist, und daß es in mindestens einer Schicht des Produkts ein Feld mit verflochtener Orientation gibt, wo der Kunststoff auf solche Weise wendelförmig orientiert oder ausgerichtet ist, daß er im Produkt eine verstärkende netzartige Struktur bildet.

15. Extrudat gemäß Anspruch 14, **dadurch gekennzeichnet**, daß mit Fasern und/oder bei der Extrusion Fasern bildenden Polymeren, wie etwa Flüssigkristallpolymeren vermischter Kunststoff zur Bildung der Felder mit verflochtener Orientation verwendet worden sind, wobei die Fasern oder die Faserformation in Drehrichtung der Läuferorgane wendelförmig ausgerichtet sind.

## Revendications

1. Procédé pour traiter une matière qui peut être extrudée dans un dispositif d'extrusion, dans lequel la matière qui peut être extrudée est amenée sous forme solide, avantageusement sous forme granulaire ou en poudre, et qui comprend, définis par le moyen formant stator (2, 3) et par le moyen formant rotor (4) :
- un défilé d'alimentation annulaire, avantageusement conique ou double-conique (5), ayant un diamètre qui se réduit de manière continue au moins partiellement, pour la matière qui peut être extrudée, et
- un canal central d'extrusion (1) pour la matière qui peut être extrudée, caractérisé en ce que, pour produire spécialement un produit d'extrusion multicouches, on utilise un nombre facultatif, au moins trois, de moyens formant stator (2, 3) et un nombre facultatif, au moins deux, de moyens formant rotor (4), agencés comme dans un empilage, alternativement l'un dans l'autre, et en ce que la matière qui peut être extrudée est premièrement fondue dans chaque défilé d'alimentation (5) pour la matière qui peut être extrudée entre le moyen formant stator (2, 3) et le moyen formant rotor (4) après l'amenée avant le canal central d'extrusion et, après cela, elle est compressée à la pression finale d'extrusion.

2. Procédé selon la revendication 1, caractérisé en ce que la pression de la matière qui peut être extrudée est élevée, de manière continue, et en ce que la matière qui peut être extrudée est fondue par induction par un conducteur ou bobine d'induction (35) dans chaque moyen formant stator (2, 3) en chauffant le moyen formant stator (2, 3), définissant le défilé d'alimentation (5) par le principe des courants de Foucault.

3. Procédé selon la revendication 1 ou 2, caractérisé en ce que la matière qui peut être extrudée est alimentée dans le défilé d'alimentation (5) à partir de plusieurs points à la périphérie du moyen formant rotor (4), de préférence à des distances égales entre chaque point.

4. Procédé selon l'une quelconque des revendications précédentes 1 ... 4, caractérisé en ce que, dans les défilés d'alimentation (5) séparés les uns des autres par le moyen formant rotor (4), c'est-à-dire sur différents côtés du moyen formant rotor (4), différentes matières qui peuvent être extrudées sont fournies.

5. Procédé selon l'une quelconque des revendications précédentes 1 ... 4, caractérisé en ce que, afin de garantir l'homogénéité du produit d'extrusion et/ou une épaisseur uniforme de la couche de matière, le moyen formant rotor (4) est mis en rotation alternativement dans des sens opposés.

6. Procédé selon la revendication 5, caractérisé en ce que, pour produire des champs d'orientation d'entrelacement dans le produit, de sorte que le plastique est orienté de manière hélicoïdale ou est orienté dans le produit formant au moins une structure de renforcement comme un réseau, des plastiques mélangés à des fibres et/ou des polymères formant fibres dans l'extrusion, comme des polymères cristallins fluides, sont utilisés en tant que matière qui peut être extrudée.

7. Dispositif d'extrusion pour traiter une matière qui peut être extrudée, dans lequel la matière qui peut être extrudée est amenée sous forme solide dans le dispositif d'extrusion, avantageusement sous forme granulaire ou en poudre, ledit dispositif d'extrusion comprenant, définis par le moyen formant stator (2, 3) et par le moyen formant rotor (4) :
- un défilé d'alimentation annulaire, avantageusement conique ou double-conique (5), ayant un diamètre qui se réduit de manière continue au moins partiellement, pour la matière qui peut être extrudée, et
- un canal central d'extrusion (1) pour la matière qui peut être extrudée, caractérisé en ce que, pour produire spécialement un produit d'extrusion multicouches, on utilise un nombre facultatif, au moins trois, de moyens formant stator (2, 3) et un nombre facultatif, au moins deux, de moyens formant rotor (4), agencés comme dans un empilage, alternativement l'un dans l'autre, et en ce que, dans chaque défilé d'alimentation (5) entre le moyen formant stator (2, 3) et le moyen formant rotor (4), il y a, premièrement, dans le sens de l'écoulement de la matière qui peut être extrudée, une zone d'amenée (51), ensuite une zone de fusion (52) et finalement une zone de compression (53) se terminant au canal central d'extrusion (1).

8. Dispositif d'extrusion selon la revendication 7, caractérisé en ce que chaque moyen formant stator (2, 3) comprend une partie formant douille se rétrécissant en cône (20) dont les surfaces intérieures et extérieures (21, 22) sont pourvues du moyen pour produire l'écoulement de matière qui peut être extrudée, avantageusement avec des rainures ou des serpentins hélicoïdaux.

9. Dispositif d'extrusion selon la revendication 7, caractérisé en ce que chaque moyen formant rotor (4) comprend une partie formant douille se rétrécissant en cône (40) dont l'extrémité de plus grand diamètre ayant une extension dentée en forme de bride (43), qui s'ajuste avec au moins un arbre d'entraînement denté (8) entraînant ledit moyen formant rotor (4), et en ce que les surfaces intérieures et extérieures (41, 42) de ladite partie formant douille (40) sont pourvues du moyen pour produire l'écoulement de matière qui peut être extrudée, avantageusement avec des rainures ou des serpentins hélicoïdaux.

10. Dispositif d'extrusion selon la revendication 7, caractérisé en ce que chaque moyen formant stator (2, 3) comprend un premier élément conique (31) et un second élément conique (32) espacés l'un de l'autre par des pièces d'écartement (33), de sorte qu'un moyen (35), pour faire fondre la matière qui peut être extrudée, a été placé dans l'espace intermédiaire (34) entre les premier et second éléments coniques (31, 32).

11. Dispositif d'extrusion selon la revendication 10, dans lequel le moyen pour faire fondre la matière qui peut être extrudée comprend un conducteur ou bobine d'induction (35) adaptée dans ledit espace intermédiaire (34).

12. Dispositif d'extrusion selon l'une quelconque des revendications précédentes 7 ... 11, caractérisé en ce que chaque défilé d'alimentation (5) pour la matière qui peut être extrudée entre le moyen formant stator (2, 3) et le moyen formant rotor (4) forme un certain angle, de sorte que chaque moyen formant stator (2, 3) et chaque moyen formant rotor (4) sont composés de parties formant douille, de forme avantageusement double-conique et agencées l'une dans et après l'autre, de façon à ce qu'au niveau du début du défilé d'alimentation (5), la composante axiale de l'écoulement de la matière qui peut être extrudée soit opposée par rapport à la composante axiale de l'écoulement de la matière qui peut être extrudée au niveau de la fin du défilé d'alimentation.

13. Dispositif d'extrusion selon l'une quelconque des revendications précédentes 6 ... 12, caractérisé en ce que, afin de garantir l'homogénéité du produit d'extrusion et/ou une épaisseur uniforme des couches de matière, le moyen formant rotor (4) est mis en rotation alternativement dans des sens opposés.

14. Produit d'extrusion, caractérisé en ce que le produit est un produit multicouches, et en ce que dans au moins une couche du produit, il y a un champ d'orientation d'entrelacement, dans lequel le plastique est orienté de manière hélicoïdale ou est orienté pour former une structure de renforcement comme un réseau dans le produit.

15. Produit d'extrusion selon la revendication 14, caractérisé en ce qu'on a utilisé un plastique mélangé avec des fibres et/ou des polymères formant fibres dans l'extrusion, comme des polymères cristallins fluides, pour former chaque champ d'orientation d'entrelacement, de sorte que les fibres ou la formation des fibres sont orientés de manière hélicoïdale dans le sens de rotation du moyen formant rotor.
